(19)

Europäisches
Patentamt
European
Patent Office
Office européen
des brevets

(11) **EP 4 203 089 A1**

(12) **EUROPEAN PATENT APPLICATION**
published in accordance with Art. 153(4) EPC

(43) Date of publication:
**28.06.2023 Bulletin 2023/26**

(21) Application number: **20950863.9**

(22) Date of filing: **31.08.2020**

(51) International Patent Classification (IPC):
***H01M 4/13*** (2010.01)

(52) Cooperative Patent Classification (CPC):
**Y02E 60/10**

(86) International application number:
**PCT/CN2020/112470**

(87) International publication number:
**WO 2022/041194 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• ZHU, Shan
  **Ningde, Fujian 352100 (CN)**
• GUAN, Ting
  **Ningde, Fujian 352100 (CN)**
• WU, Fei
  **Ningde, Fujian 352100 (CN)**
• ZENG, Qiao
  **Ningde, Fujian 352100 (CN)**

(74) Representative: **Icosa**
  **83 avenue Denfert-Rochereau**
  **75014 Paris (FR)**

(54) **ELECTRODE PLATE, ELECTROCHEMICAL APPARATUS, AND ELECTRONIC APPARATUS**

(57)     This application provides an electrode plate, an electrochemical apparatus, and an electronic apparatus. The electrode plate includes: a current collector, including, in a width direction, a first edge region, a second edge region, and a middle region located between the first edge region and the second edge region; a first coating layer, including a first portion and a second portion disposed on the first edge region and the second edge region respectively; and a second coating layer, where part of the second coating layer is disposed on the middle region, another part of the second coating layer is disposed on the first coating layer, and the second coating layer includes an active material; where there is a first bonding force between the first portion and the first edge region, there is a second bonding force between the second portion and the second edge region, there is a third bonding force between the second coating layer and the middle region, and the first bonding force and the second bonding force are both greater than the third bonding force. Embodiments of this application improve electric performance and safety performance of the electrochemical apparatus, while minimizing influence on volumetric energy density of the electrochemical apparatus.

FIG. 1

## Description

### TECHNICAL FIELD

This application relates to the field of electronic technologies, and in particular, to an electrode plate, an electrochemical apparatus, and an electronic apparatus.

### BACKGROUND

At present, to ensure processing and safety performance of an electrode plate, a primer coating layer is generally added between a current collector and an active material layer. Although adding a primer coating layer can significantly increase a bonding force between the electrode plate and the current collector, volumetric energy density of an electrochemical apparatus (for example, a lithium-ion battery) is decreased. How electric performance of an electrochemical apparatus is improved and volumetric energy density of the electrochemical apparatus is ensured is a problem to be resolved.

### SUMMARY

This application adds a primer coating layer to a specific region, which improves electric performance and safety performance of an electrochemical apparatus, while minimizing influence on volumetric energy density of the electrochemical apparatus.

An embodiment of this application provides an electrode plate, including: a current collector, including, in a width direction, a first edge region, a second edge region, and a middle region located between the first edge region and the second edge region; a first coating layer, including a first portion and a second portion disposed on the first edge region and the second edge region respectively; and a second coating layer, where part of the second coating layer is disposed on the middle region, another part of the second coating layer is disposed on the first coating layer, and the second coating layer includes an active material; where there is a first bonding force between the first portion and the first edge region, there is a second bonding force between the second portion and the second edge region, there is a third bonding force between the second coating layer and the middle region, and the first bonding force and the second bonding force are both greater than the third bonding force.

In some embodiments, the first portion has a width d1, the second portion has a width d2, and the second coating layer has a width D, where $1\% \leq d1/D \leq 20\%$, and $1\% \leq d2/D \leq 20\%$.

In some embodiments, the first bonding force and the second bonding force are both 2 to 5 times the third bonding force; and/or the first bonding force and the second bonding force are both greater than 10 N/m.

In some embodiments, a thickness of the first coating layer is h, and a thickness of the second coating layer is H, where $0.5\ \mu m < h < 8\ \mu m$, and $20\ \mu m < H < 200\ \mu m$.

In some embodiments, the first coating layer includes a first conductive agent and a first binder, where the first conductive agent includes at least one of conductive carbon black, carbon nanotubes, conductive graphite, graphene, acetylene black, or carbon nanofibers, and the first binder includes at least one of polyvinylidene fluoride, vinylidene fluoride-fluorinated olefin copolymer, polyvinylpyrrolidone, polyacrylonitrile, poly(methyl acrylate), polytetrafluoroethylene, sodium carboxymethyl cellulose, styrene-butadiene rubber, polyurethane, fluorinated rubber, or polyvinyl alcohol; where a mass percentage of the first conductive agent is 30%-80%, and a mass percentage of the first binder is 20%-70%.

In some embodiments, in a length direction of the current collector, the first portion and/or the second portion is discontinuously coated, a percentage of a total coating length of the first portion to a coating length of the second coating layer is greater than 80%, and a percentage of a total coating length of the second portion to the length of the second coating layer is greater than 80%. In some embodiments, at least part of the current collector is etched.

In some embodiments, the first edge region and the second edge region are etched, and roughness of the first edge region and roughness of the second edge region are both 2 to 4 times roughness of the middle region.

Another embodiment of this application provides an electrochemical apparatus, including a positive electrode plate, a negative electrode plate, and a separator disposed between the positive electrode plate and the negative electrode plate, where the positive electrode plate and/or the negative electrode plate is the electrode plate according to any one of the foregoing embodiments.

An embodiment of this application further provides an electronic apparatus, including the foregoing electrochemical apparatus.

In this application, the coating layer with a different bonding force is disposed on the edge regions of the current collector, such that the bonding force between the coating layer and the current collector is greater than the bonding force between the active material coating layer and the current collector, which prevents the current collector from peeling off during cycling of the electrochemical apparatus, and improves the electric performance and safety performance of the electrochemical apparatus. In addition, the coating layer is disposed on only the edge regions of the current collector, minimizing the influence on the volumetric energy density of the electrochemical apparatus.

**BRIEF DESCRIPTION OF DRAWINGS**

FIG. 1 is a front view of an electrode plate according to an embodiment of this application.

FIG. 2 is a top view of a first coating layer (continuous) and a current collector according to an embodiment of this application.

FIG. 3 is a top view of a first coating layer (discontinuous) and a current collector according to another embodiment of this application.

FIG. 4 is a front view of an electrode assembly of an electrochemical apparatus according to an embodiment of this application.

**DESCRIPTION OF EMBODIMENTS**

The following embodiments may allow persons skilled in the art to understand this application more comprehensively, and impose no limitation on this application in any manner.

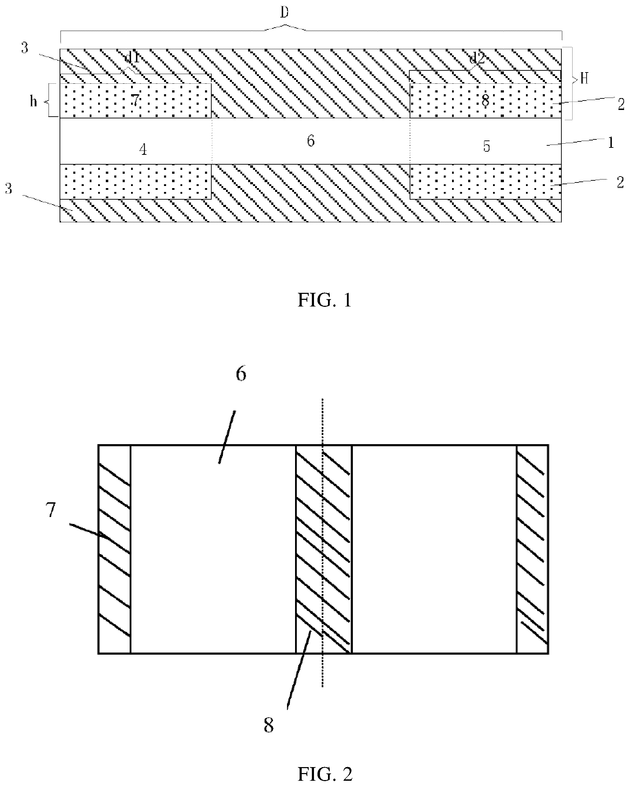

As shown in FIG. 1, FIG. 1 is a front view (cross-sectional view) of an electrode plate according to an embodiment of this application. The electrode plate may include a current collector 1, and the current collector 1 includes, in a width direction, a first edge region 4, a second edge region 5, and a middle region 6 located between the first edge region 4 and the second edge region 5. It should be understood that the first edge region 4, the second edge region 5, and the middle region 6 are distinguished with dashed lines in FIG. 1, but actually the dashed lines may not exist. In some embodiments, the electrode plate further includes a first coating layer 2, and the first coating layer 2 may include a first portion 7 and a second portion 8 disposed on the first edge region 4 and the second edge region 5 respectively. In some embodiments, materials, widths, and thicknesses of the first portion 7 and the second portion 8 may be the same or different.

In some embodiments, the electrode plate further includes a second coating layer 3, where part of the second coating layer 3 is disposed on the middle region 6, another part of the second coating layer 3 is disposed on the first coating layer 2, and the second coating layer 3 includes an active material. In some embodiments, there is a first bonding force between the first portion 7 and the first edge region 4, there is a second bonding force between the second portion 8 and the second edge region 5, there is a third bonding force between the second coating layer 3 and the middle region 6, and the first bonding force and the second bonding force are both greater than the third bonding force. In this embodiment of this application, the first coating layer 2 is disposed on the first edge region 4 and the second edge region 5 of the current collector 1, such that the bonding force between the first coating layer 2 and the current collector 1 is greater than the bonding force between the second coating layer 3 and the middle region 6, which prevents peeling between the current collector 1 and the second coating layer 3 during cycling of an electrochemical apparatus, and improves electric performance and safety performance of the electrochemical apparatus. In addition, the coating layer is disposed on only the first edge region 4 and the second edge region 5 of the current collector 1, minimizing influence on volumetric energy density of the electrochemical apparatus.

In some embodiments, the first portion 7 has a width d1, the second portion 8 has a width d2, and the second coating layer 3 has a width D, where $1\% \leq d1/D \leq 20\%$, and $1\% \leq d2/D \leq 20\%$. If the width of the first portion 7 or the second portion 8 is excessively small, for example, lower than 1% of the width of the second coating layer 3, the first coating layer 2 has a limited effect on increasing the bonding force between the second coating layer 3 and the current collector 1. Generally, because a binder contained in the second coating layer is limited, the bonding force between the second coating layer and the current collector is correspondingly limited. If no first coating layer is disposed between the current collector and the second coating layer, expansion and contraction of the second coating layer during cycling easily causes peeling between the second coating layer and the current collector. Disposing the first coating layer and increasing the binder contained in the first coating layer increase the bonding force between the second coating layer and the current collector, thereby preventing the peeling between the second coating layer and the current collector. If the width of the first portion or the second portion is excessively large, for example, higher than 20% of the width of the second coating layer, the volumetric energy density of the electrochemical apparatus is adversely affected. In some embodiments, to further reduce the influence on the volumetric energy density of the electrochemical apparatus while still achieving a great bonding force between the first coating layer and the current collector, $1\% \leq d1/D \leq 10\%$, and $1\% \leq d2/D \leq 10\%$.

In some embodiments, the first bonding force and the second bonding force are both 2 to 5 times the third bonding force. In some embodiments, the first bonding force and the second bonding force are both greater than 10 N/m. In this way, the bonding force between the second coating layer and the current collector can be well increased.

In some embodiments, a thickness of the first coating layer 2 is h, and a thickness of the second coating layer 3 is H, where 0.5 $\mu$m < h < 8 $\mu$m, and 20 $\mu$m < H < 200 $\mu$m. The thickness H of the second coating layer is a thickness of the second coating layer 3 on the middle region 6, or a total thickness of the first portion 7 of the first coating layer 2 on the first edge region 4 and the second coating layer 3, or a total thickness of the second portion 8 of the first coating layer 2 on the second edge region 5 and the second coating layer 3. If the thickness of the first coating layer is excessively small, for example, less than 0.5 $\mu$m, there is a limited effect on increasing the bonding force between the second coating layer and the current collector. If the thickness of the first coating layer is excessively large, the volumetric energy density of the electrochemical apparatus is adversely affected. If the thickness of the second coating layer is excessively small, the active material per unit area is excessively few, which affects the volumetric energy density of the electrochemical apparatus. If the thickness of the second coating layer is excessively large, a migration path for intercalation and deintercalation of lithium ions close to the second coating layer of the current collector is excessively long, which affects efficiency of intercalation and deintercalation of the lithium ions.

In some embodiments, the first coating layer 2 includes a first conductive agent and a first binder. In some embodiments, the first conductive agent includes at least one of conductive carbon black, carbon nanotubes, conductive graphite, graphene, acetylene black, or carbon nanofibers. In some embodiments, the first binder includes at least one of polyvinylidene fluoride, vinylidene fluoride-fluorinated olefin copolymer, polyvinylpyrrolidone, polyacrylonitrile, poly(methyl acrylate), polytetrafluoroethylene, sodium carboxymethyl cellulose, styrene-butadiene rubber, polyurethane, fluorinated rubber, or polyvinyl alcohol. In some embodiments, a mass percentage of the first conductive agent in the first coating layer is 30%-80%, and a mass percentage of the first binder is 20%-70%. If the mass percentage of the first conductive agent is excessively small, conductive performance of the first coating layer is adversely affected. If the mass percentage of the first conductive agent is excessively large, the mass percentage of the first binder is excessively small, which affects bonding performance of the first coating layer.

It should be understood that in FIG. 1, the first coating layer 2 and the second coating layer 3 are both formed on two sides of the current collector 1, which is merely exemplary, and the first coating layer 2 and the second coating layer 3 may alternatively be formed on only one side of the current collector 1.

As shown in FIG. 2, FIG. 2 is a top view of a first coating layer (continuous) and a current collector according to an embodiment of this application. For simplicity, only the middle region 6 of the current collector 1 and the first portion 7 and the second portion 8 of the first coating layer 2 are shown. A dashed line in FIG. 2 shows a slitting position of the electrode plate. The first coating layer 2 is disposed on the edge regions of the current collector, such that influence of stress during slitting and burrs of the current collector during slitting can be reduced. In some embodiments, in a length direction of the current collector 1, the first portion 7 and/or the second portion 8 may be continuously coated,

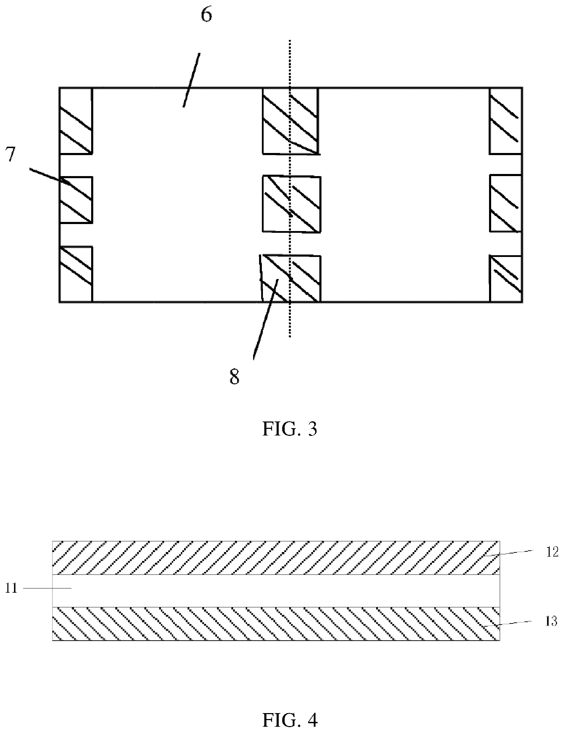

As shown in FIG. 3, in some embodiments, in a length direction of the current collector 1, the first portion 7 and/or the second portion 8 may be discontinuously coated, a percentage of a total coating length of the first portion 7 to a length of the second coating layer 3 is greater than 80%, and a percentage of a total coating length of the second portion 8 to the length of the second coating layer 3 is greater than 80%. Discontinuous coating further reduces the influence on the volumetric energy density of the electrochemical apparatus. In addition, if the coating length of the first portion 7 and/or the second portion 8 is excessively short, the bonding performance of the first coating layer 2 cannot be fully exploited.

In some embodiments, at least part or all of the current collector 1 is etched. The current collector 1 being etched can correspondingly increase roughness of the current collector, thereby increasing the bonding force between the current collector and the first coating layer or the second coating layer. In some embodiments, the first edge region and the second edge region are etched, and roughness of the first edge region 4 and roughness of the second edge region 5 are both 2 to 4 times roughness of the middle region 6. The first edge region 4 and the second edge region 5 being etched further increases the bonding force between the current collector 1 and the first coating layer 2. In some embodiments, etching may be performed at a region of the first coating layer where the current collector is disposed. In some embodiments, etching is mainly performed by browning or blackening, or certainly may be performed in other suitable manners. In some embodiments, roughness of an etched region of the current collector is 2 to 4 times roughness of a region not etched. In some embodiments, the roughness of the region not etched is less than 2 $\mu$m.

It should be understood that the electrode plate of this application may be a positive electrode plate or a negative electrode plate. As shown in FIG. 4, an embodiment of this application further provides an electrochemical apparatus. The electrochemical apparatus includes a separator 11, a positive electrode plate 12, and a negative electrode plate 13, where the separator 11 is disposed between the positive electrode plate 12 and the negative electrode plate 13, and the positive electrode plate 12 and/or the negative electrode plate 13 is the electrode plate with the foregoing structure.

In some embodiments, a positive electrode current collector of the positive electrode plate 12 may be aluminum (Al) foil, or certainly may be another positive electrode current collector commonly used in the art. In some embodiments, a thickness of the positive electrode current collector may be 1 $\mu$m-200 $\mu$m.

In some embodiments, when the electrode plate is the positive electrode plate 12, the active material of the second coating layer 3 may include at least one of lithium cobalt oxide, lithium manganate oxide, lithium iron phosphate, lithium nickel cobalt manganate, lithium nickel cobalt aluminate, or lithium nickel manganate. In some embodiments, the second coating layer 3 further includes a binder and a conductive agent. In some embodiments, the binder in the second coating layer 3 may include at least one of polyvinylidene fluoride, vinylidene fluoride-hexafluoropropylene copolymer, styrene-acrylate copolymer, styrene-butadiene copolymer, polyamide, polyacrylonitrile, polyacrylic ester, polyacrylic acid, polyacrylic salt, sodium carboxymethyl cellulose, polyvinyl acetate, polyvinylpyrrolidone, polyvinylether, polymethyl methacrylate, polytetrafluoroethylene, or polyhexafluoropropylene. In some embodiments, the conductive agent in the second coating layer 3 may include at least one of conductive carbon black, Ketjen black, laminated graphite, graphene, carbon nanotubes, or carbon fibers. In some embodiments, a mass ratio of the positive electrode active material, the conductive agent, and the binder in the second coating layer 3 may be 91-99:0.5-3:0.5-6. It should be understood that the foregoing descriptions are merely examples, and any other suitable material, thickness, and mass ratio may be used for the positive electrode active substance layer.

In some embodiments, a negative electrode current collector of the negative electrode plate 13 may be at least one of copper foil, nickel foil, or carbon-based current collector, or certainly may be another negative electrode current collector commonly used in the art. In some embodiments, a thickness of the negative electrode current collector may be 1 $\mu$m-200 $\mu$m.

In some embodiments, when the electrode plate is the negative electrode plate 13, the active material of the second coating layer 3 may include at least one of artificial graphite, natural graphite, hard carbon, meso-carbon microbeads, silicon alloy, tin alloy, or pure silicon. In some embodiments, the second coating layer 3 may further include a conductive agent and a binder. The conductive agent in the second coating layer 3 may include at least one of conductive carbon black, Ketjen black, laminated graphite, graphene, carbon nanotubes, or carbon fibers. In some embodiments, the binder in the second coating layer 3 may include at least one of carboxymethyl cellulose (CMC), polyacrylic acid, polyvinyl pyrrolidone, polyaniline, polyimide, polyamide-imide, polysiloxane, styrene-butadiene rubber, epoxy resin, polyester resin, urethane resin, or polyfluorene. It should be understood that the materials disclosed above are merely examples, and any other suitable material may be used for the second coating layer 3 of the negative electrode active material layer. In some embodiments, a mass ratio of the negative electrode active material, the conductive agent, and the binder in the second coating layer 3 may be 91-99:0-3:1-6. It should be understood that the foregoing description is merely an example, and any other suitable mass ratio may be used.

In some embodiments, the separator 11 includes at least one of polyethylene, polypropylene, polyvinylidene fluoride, polyethylene terephthalate, polyimide, or aramid. For example, polyethylene includes at least one of high-density polyethylene, low-density polyethylene, or ultra-high-molecular-weight polyethylene. Especially, polyethylene and polypropylene have a good effect on preventing short circuits and can improve stability of a battery through a shutdown effect. In some embodiments, a thickness of the separator is approximately 5 $\mu$m-20 $\mu$m.

In some embodiments, a surface of the separator may further include a porous layer. The porous layer is disposed on at least one surface of the separator, and includes inorganic particles and a binder, where the inorganic particles are selected from at least one of aluminum oxide ($Al_2O_3$), silicon oxide ($SiO_2$), magnesium oxide (MgO), titanium oxide ($TiO_2$), hafnium oxide ($HfO_2$), stannic oxide ($SnO_2$), cerium dioxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, pores of the separator have a diameter range of approximately 0.01 $\mu$m-1 $\mu$m. The binder of the porous layer is selected from at least one of polyvinylidene fluoride, vinylidene fluoride-hexafluoropropylene copolymer, polyamide, polyacrylonitrile, polyacrylic ester, polyacrylic acid, polyacrylic salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, an electrode assembly of the electrochemical apparatus is a wound electrode assembly or a laminated electrode assembly.

In some embodiments, the electrochemical apparatus includes a lithium-ion battery, but this application is not limited thereto. In some embodiments, the electrochemical apparatus may further include an electrolyte. The electrolyte may be one or more of a gel electrolyte, a solid electrolyte, and an electrolyte solution, and the electrolyte solution includes a lithium salt and a non-aqueous solvent. The lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoro borate. For example, $LiPF_6$ is selected as the lithium salt because it can provide a high ionic conductivity and improve cycling characteristics.

The non-aqueous solvent may be selected from a carbonate compound, a carboxylate compound, an ether compound, another organic solvent, or a combination thereof.

The carbonate compound may be selected from a linear carbonate compound, a cyclic carbonate compound, a fluorocarbonate compound, or a combination thereof.

The linear carbonate compound may be selected from diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. The cyclic carbonate compound may be selected from ethylene carbonate (EC), propylene carbonate (PC), butylene carbonate (BC), vinyl ethylene carbonate (VEC), or a combination thereof. The fluorocarbonate compound may be selected from fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

The carboxylate compound may be selected from methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, methyl formate, or a combination thereof.

The ether compound may be selected from dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

The another organic solvent may be selected from dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments of this application, a lithium-ion battery is used as an example. A positive electrode plate, a separator, and a negative electrode plate are wound or stacked in sequence to form an electrode assembly, and the electrode assembly is then packaged in, for example, an aluminum-plastic film, followed by electrolyte injection, formation, and packaging, to prepare a lithium-ion battery. Then, a performance test is performed on the prepared lithium-ion battery.

Persons skilled in the art will understand that the preparation method of the electrochemical apparatus (for example, the lithium-ion battery) described above is merely an example. Without departing from the content disclosed in this application, other methods commonly used in the art may be used.

An embodiment of this application further provides an electronic apparatus including the foregoing electrochemical apparatus. The electronic apparatus in the embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

Some specific examples and comparative examples are listed below to better illustrate this application. Lithium-ion batteries are used as examples.

Example 1

Preparation of positive electrode plate: A positive electrode active material lithium cobalt oxide, a conductive agent conductive carbon black, and a binder polyvinylidene fluoride (PVDF) were dissolved in an N-methylpyrrolidone (NMP) solution at a mass ratio of 97.6:1.1:1.3, to form a positive electrode slurry. Aluminum foil was used as a positive electrode current collector. The positive electrode slurry was applied onto the positive electrode current collector with a coating thickness of 50 $\mu$m, followed by drying, cold pressing, and cutting, to obtain a positive electrode plate.

Preparation of negative electrode plate: A first binder polyvinylidene fluoride and a first conductive agent conductive carbon black were dissolved in an N-methylpyrrolidone (NMP) solution at a mass ratio of 60:40, to form a first coating layer slurry. Copper foil with a thickness of 10 $\mu$m and a width of 80 mm was used as a negative electrode current collector. The first coating layer slurry was applied onto edge positions of the negative electrode current collector with a coating width of 5 mm and a thickness of 2 $\mu$m on two edge positions, followed by drying, to obtain a first coating layer.

A negative electrode active material artificial graphite and a binder styrene-butadiene rubber were dissolved in deionized water at a mass ratio of 98:2, to form a second coating layer slurry. The second coating layer slurry was applied onto the negative electrode current collector and the first coating layer, followed by drying and cold pressing, to obtain a negative electrode active material layer with a thickness of 60 $\mu$m. After cutting, a negative electrode plate was obtained.

Preparation of separator: Polyethylene (PE) with a thickness of 8 $\mu$m was used as a separator substrate, a 2 $\mu$m aluminum oxide ceramic layer was applied on two sides of the separator substrate, and finally, 2.5 mg of binder polyvinylidene fluoride (PVDF) was applied on the two sides coated with the ceramic layers, followed by drying.

Preparation of electrolyte: In an environment with a water content less than 10 ppm, lithium hexafluorophosphate and a non-aqueous organic solvent (ethylene carbonate (EC):dimethyl carbonate (DMC) = 40:60 by mass) were mixed at a mass ratio of 8:92, to prepare an electrolyte.

Preparation of lithium-ion battery: The positive electrode plate, the separator, and the negative electrode plate were stacked in sequence, such that the separator was sandwiched between the positive electrode plate and the negative electrode plate for separation, and the stack was wound to obtain an electrode assembly. The electrode assembly was put in an outer packaging aluminum-plastic film, and was dehydrated at 80°C. Then, the foregoing electrolyte was injected and packaging was performed, followed by processes such as formation, degassing, and trimming, to obtain a lithium-ion battery.

For other examples and comparative examples, parameters were changed based on steps in Example 1. In Example 5, the two edge regions of the negative electrode current collector coated with the first portion and the second portion were etched, roughness of the etched edge regions was 3 $\mu$m, and roughness of other regions not etched was 1 $\mu$m. Specific changed parameters are shown in the table below.

The following describes test methods for various parameters in this application.

Test method for volumetric energy density:

The lithium-ion battery was placed in a 25°C thermostat and left standing for 30 minutes, such that the lithium-ion battery reached a constant temperature. The lithium-ion battery having reached a constant temperature was charged to a voltage of 4.4 V at a constant current of 0.5C, then charged to a current of 0.05C at a constant voltage of 4.4 V, and discharged to a voltage of 3.0 V at 0.5C. A discharge capacity was recorded.

$$\text{Volumetric energy density} = \text{discharge capacity}/(\text{length} \times \text{width} \times \text{thickness}$$

$$\text{of lithium-ion battery}).$$

Heavy impact test of lithium-ion battery:

At 25°C, the lithium-ion battery was charged to a voltage of 4.4 V at a constant current of 0.5C, and then charged to a current of 0.05C at a constant voltage of 4.4 V. The UL 1642 test standard was used. With a heavy hammer with a mass of 9.8 kg, a diameter of 15.8 mm, a falling height of 61 $\pm$ 2.5 cm, and a falling direction being parallel to the longitudinal direction of the separator, the lithium-ion battery was subjected to the impact test, and a lithium-ion battery that did not explode, catch fire, or smoke was recorded as passing the impact test. Ten lithium-ion batteries were tested in each group, and the pass rate of the heavy impact test of the lithium-ion batteries was calculated (if four lithium-ion batteries passed the heavy impact test, the pass rate was represented as 4/10).

Table 1 shows the parameters and test results in the examples and comparative examples.

**Table 1**

| No. | Width of each portion of first coating layer (mm) | Width of second coating layer (mm) | Width of each portion of first coating layer/width of second coating layer | Thickness of first coating layer (μm) | Thickness of second coating layer (μm) | Mass percentage of first conductive agent | Mass percentage of first binder | Ratio of coating length of first coating layer to length of second coating layer | Bonding force between first coating layer and current collector (N/m) | Bonding force between second coating layer and middle region of current collector (N/m) | Volumetric energy density increase rate | Pass rate of impact test |
|---|---|---|---|---|---|---|---|---|---|---|---|---|
| Comparative Example 1 | 80 | 80 | 100% | 2 | 60 | 40% | 60% | 1 | 15 | 15 | 0% | 4/10 |
| Example 1 | 5 | 80 | 6.3% | 2 | 60 | 40% | 60% | 1 | 15 | 5 | 1% | 8/10 |
| Example 2 | 0.8 | 80 | 1% | 2 | 60 | 40% | 60% | 1 | 15 | 5 | 1.5% | 8/10 |
| Example 3 | 8 | 80 | 10% | 2 | 60 | 40% | 60% | 1 | 15 | 5 | 0.8% | 8/10 |
| Example 4 | 16 | 80 | 20% | 2 | 60 | 40% | 60% | 1 | 15 | 5 | 0.5% | 7/10 |
| Example 5 | 5 | 80 | 6.3% | 2 | 60 | 40% | 60% | 1 | 20 | 5 | 1% | 9/10 |
| Example 6 | 5 | 80 | 6.3% | 1 | 60 | 40% | 60% | 1 | 13 | 5 | 1% | 9/10 |
| Example 1 | 5 | 80 | 6.3% | 2 | 60 | 40% | 60% | 1 | 15 | 5 | 1% | 8/10 |
| Example 7 | 5 | 80 | 6.3% | 5 | 60 | 40% | 60% | 1 | 16 | 5 | 0.9% | 8/10 |
| Example 8 | 5 | 80 | 6.3% | 7 | 60 | 40% | 60% | 1 | 18 | 5 | 0.8% | 8/10 |
| Example 9 | 5 | 80 | 6.3% | 2 | 30 | 40% | 60% | 1 | 15 | 5 | 1.8% | 9/10 |
| Example 1 | 5 | 80 | 6.3% | 2 | 60 | 40% | 60% | 1 | 15 | 5 | 1% | 8/10 |
| Example 10 | 5 | 80 | 6.3% | 2 | 100 | 40% | 60% | 1 | 15 | 5 | 0.8% | 8/10 |
| Example 11 | 5 | 80 | 6.3% | 2 | 160 | 40% | 60% | 1 | 15 | 5 | 0.5% | 7/10 |
| Example 12 | 5 | 80 | 6.3% | 2 | 60 | 30% | 70% | 1 | 22 | 5 | 1% | 8/10 |

(continued)

| No. | Width of each portion of first coating layer (mm) | Width of second coating layer (mm) | Width of each portion of first coating layer/ width of second coating layer | Thickness of first coating layer (μm) | Thickness of second coating layer (μm) | Mass percentage of first conductive agent | Mass percentage of first binder | Ratio of coating length of first coating layer to length of second coating layer | Bonding force between first coating layer and current collector (N/m) | Bonding force between second coating layer and middle region of current collector (N/m) | Volumetric energy density increase rate | Pass rate of impact test |
|---|---|---|---|---|---|---|---|---|---|---|---|---|
| Example 1 | 5 | 80 | 6.3% | 2 | 60 | 40% | 60% | 1 | 15 | 5 | 1% | 8/10 |
| Example 13 | 5 | 80 | 6.3% | 2 | 60 | 60% | 40% | 1 | 13 | 5 | 1% | 8/10 |
| Example 14 | 5 | 80 | 6.3% | 2 | 60 | 80% | 20% | 1 | 10 | 5 | 0.8% | 8/10 |
| Example 15 | 5 | 100 | 6.3% | 1 | 80 | 40% | 60% | 0.8 | 15 | 8 | 1.3% | 8/10 |

9

It can be learned from comparison between Example 1 and Comparative Example 1 that the first coating layer is applied on only two edge regions of the current collector, such that the bonding force between the first coating layer and the current collector is greater than the bonding force between the second coating layer and the middle region of the current collector. Because the bonding force between the second coating layer and the current collector is weak, peeling between the active substance coating layer and the current collector is likely to occur during impact, increasing the pass rate of the impact test of the lithium-ion batteries from 4/10 to 8/10. In addition, because the coating region of the first coating layer is decreased, the thickness of the electrode assembly of the lithium-ion battery becomes smaller, and the volumetric energy density of the lithium-ion battery is increased by 1%. It can be learned from Examples 2 to 5 that adjusting the width of the first coating layer can achieve increases in the energy density and the pass rate of the impact test. However, increasing the coating width causes a smaller energy density increase rate. It can be learned from comparison between Example 5 and Example 1 that etching the edge regions of the current collector coated with the first coating layer can increase the bonding force between the first coating layer and the current collector, thereby increasing the pass rate of the impact test of the lithium-ion batteries to 9/10.

It can be learned from comparison among Example 1 and Examples 6 to 8 that the thickness of the first coating layer is increased to enhance the bonding force between the first coating layer and the current collector. Generally, if the second coating layer has a specific thickness, the first coating layer has an optimal thickness value. If the first coating layer has a relatively small thickness, a coating status cannot be ensured well and the bonding force between the first coating layer and the current collector is limited. However, an excessively large thickness causes excessive pressure on the second coating layer active substance on the edge regions, affecting extractable capacity to some extent. Adjusting the thickness of the first coating layer has small influence on the impact test, and the pass rates can reach 8/10, but the volumetric energy density increase rate becomes smaller as the thickness of the first coating layer increases.

It can be learned from comparison among Example 1 and Examples 9 to 11 that for different thicknesses of the second coating layers, the increases in the energy density and the pass rate of the impact test can be achieved by adjusting the thickness. However, after the thickness of the electrode plate is increased, the first coating layer limits the increase in the overall energy density, with the increase being reduced from 1% to 0.5%. In addition, there is small influence on the pass rate of the impact test.

It can be learned from comparison among Example 1 and Examples 12 to 14 that adjusting the percentage of the binder in the first coating layer can enhance the bonding force between the edge of the first coating layer and the current collector. In specific cases, if the energy density increase rates are the same, the increase of 1% can be achieved for all the first coating layers in these examples. When the percentage of the bonding force is low, for example, lower than 20%, the bonding force between the first coating layer and the current collector is excessively weak, leading to an adverse effect on the thickness of the electrode plate, causing loss of part of the volumetric energy density, with the energy density increase rate being reduced to less than 0.8%. Because the bonding force between the second coating layer and the current collector is not changed, the influence on the pass rate of the impact test is small, and the pass rate of 8/10 can be ensured.

It can be learned from comparison between Example 15 and Comparative Example 1 that the bonding force between the first coating layer and the current collector being greater than the bonding force between the second coating layer and the middle region of the current collector increases the pass rate of the impact test of the lithium-ion batteries from 4/10 to 8/10. In addition, the discontinuous coating is applied to the first coating layer, and the width ratio of the first coating layer and the second coating layer is decreased, which increase the volumetric energy density of the lithium-ion battery by 1.3%.

The foregoing descriptions are merely preferred examples of this application and explanations of the technical principles used. Persons skilled in the art should understand that the scope of disclosure involved in this application is not limited to the technical solutions formed by the specific combination of the foregoing technical features, and should also cover other technical solutions formed by any combination of the foregoing technical features or their equivalent features, for example, the technical solution formed by replacement between the foregoing features and technical features having similar functions disclosed in this application.

## Claims

1. An electrode plate, comprising:

   a current collector, comprising, in a width direction, a first edge region, a second edge region, and a middle region located between the first edge region and the second edge region;
   a first coating layer, comprising a first portion and a second portion disposed on the first edge region and the second edge region respectively; and
   a second coating layer, wherein part of the second coating layer is disposed on the middle region, another part of the second coating layer is disposed on the first coating layer, and the second coating layer comprises an active material; wherein

there is a first bonding force between the first portion and the first edge region, there is a second bonding force between the second portion and the second edge region, there is a third bonding force between the second coating layer and the middle region, and the first bonding force and the second bonding force are both greater than the third bonding force.

2. The electrode plate according to claim 1, wherein the first portion has a width d1, the second portion has a width d2, and the second coating layer has a width D, wherein $1\% \leq d1/D \leq 20\%$, and $1\% \leq d2/D \leq 20\%$.

3. The electrode plate according to claim 1, wherein the first bonding force and the second bonding force are both 2 to 5 times the third bonding force; and/or the first bonding force and the second bonding force are both greater than 10 N/m.

4. The electrode plate according to claim 1, wherein a thickness of the first coating layer is h, and a thickness of the second coating layer is H, wherein $0.5\ \mu m < h < 8\ \mu m$, and $20\ \mu m < H < 200\ \mu m$.

5. The electrode plate according to claim 1, wherein the first coating layer comprises a first conductive agent and a first binder, wherein the first conductive agent comprises at least one of conductive carbon black, carbon nanotubes, conductive graphite, graphene, acetylene black, or carbon nanofibers; and

the first binder comprises at least one of polyvinylidene fluoride, vinylidene fluoride-fluorinated olefin copolymer, polyvinylpyrrolidone, polyacrylonitrile, poly(methyl acrylate), polytetrafluoroethylene, sodium carboxymethyl cellulose, styrene-butadiene rubber, polyurethane, fluorinated rubber, or polyvinyl alcohol; wherein a mass percentage of the first conductive agent is 30%-80%, and a mass percentage of the first binder is 20%-70%.

6. The electrode plate according to claim 1, wherein in a length direction of the current collector, the first portion and/or the second portion is discontinuously coated, a percentage of a total coating length of the first portion to a coating length of the second coating layer is greater than 80%, and a percentage of a total coating length of the second portion to the coating length of the second coating layer is greater than 80%.

7. The electrode plate according to claim 1, wherein at least part of the current collector is etched.

8. The electrode plate according to claim 7, wherein the first edge region and the second edge region are etched, and roughness of the first edge region and roughness of the second edge region are both 2 to 4 times roughness of the middle region.

9. An electrochemical apparatus, comprising:

a positive electrode plate;
a negative electrode plate; and
a separator disposed between the positive electrode plate and the negative electrode plate; wherein
the positive electrode plate and/or the negative electrode plate is the electrode plate according to any one of claims 1 to 8.

10. An electronic apparatus, comprising the electrochemical apparatus according to claim 9.

FIG. 1

FIG. 2

6

7

8

FIG. 3

11

12

13

FIG. 4

## INTERNATIONAL SEARCH REPORT

| International application No. |
|---|
| **PCT/CN2020/112470** |

| A. | CLASSIFICATION OF SUBJECT MATTER |
|---|---|

H01M 4/13(2010.01)i

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 极片, 电极, 集流体, 集电体, 边缘, 粘结层, 涂层, 粘结力, 剥离, 刻蚀, 粗糙度, pole piece, electrode, current collector, edge, adhesive layer, coat, cohesive force, peel, etch, roughness

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 207233865 U (NINGDE CONTEMPORARY AMPEREX TECHNOLOGY CO., LTD.) 13 April 2018 (2018-04-13) description paragraphs 2-74, figure 2 | 1-2, 4-6, 9-10 |
| Y | CN 207233865 U (NINGDE CONTEMPORARY AMPEREX TECHNOLOGY CO., LTD.) 13 April 2018 (2018-04-13) description paragraphs 2-74, figure 2 | 3, 7-8 |
| Y | CN 207353383 U (NINGDE CONTEMPORARY AMPEREX TECHNOLOGY CO., LTD.) 11 May 2018 (2018-05-11) description, paragraphs 4-84, and figures 2-3 | 1-10 |
| X | CN 1525591 A (SANYO ELECTRIC CO., LTD.) 01 September 2004 (2004-09-01) description page 1 line 12 - page 9 line 17, figures 1-3 | 1-2, 4-6, 9-10 |
| Y | CN 1525591 A (SANYO ELECTRIC CO., LTD.) 01 September 2004 (2004-09-01) description page 1 line 12 - page 9 line 17, figures 1-3 | 3, 7-8 |
| Y | KR 20170021487 A (LG CHEMICAL LTD.) 28 February 2017 (2017-02-28) description, paragraphs 3-60, and figures 1-4 | 1-10 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 May 2021** | **11 June 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2020/112470** |

### C. DOCUMENTS CONSIDERED TO BE RELEVANT

| Category* | Citation of document, with indication, where appropriate, of the relevant passages | Relevant to claim No. |
| --- | --- | --- |
| A | CN 102842701 A (DONGGUAN AMPEREX TECHNOLOGY LIMITED) 26 December 2012 (2012-12-26)<br>  entire document | 1-10 |
| A | CN 109088050 A (NINGDE AMPEREX TECHNOLOGY LTD.) 25 December 2018 (2018-12-25)<br>  entire document | 1-10 |
| A | JP 2010250978 A (NISSAN MOTOR CO., LTD.) 04 November 2010 (2010-11-04)<br>  entire document | 1-10 |

Form PCT/ISA/210 (second sheet) (January 2015)

## INTERNATIONAL SEARCH REPORT
### Information on patent family members

International application No.

**PCT/CN2020/112470**

| Patent document cited in search report | | | Publication date (day/month/year) | Patent family member(s) | | | Publication date (day/month/year) |
|---|---|---|---|---|---|---|---|
| CN | 207233865 | U | 13 April 2018 | None | | | |
| CN | 207353383 | U | 11 May 2018 | None | | | |
| CN | 1525591 | A | 01 September 2004 | US | 7258948 | B2 | 21 August 2007 |
| | | | | KR | 20040076831 | A | 03 September 2004 |
| | | | | TW | I233709 | B | 01 June 2005 |
| | | | | JP | 4201619 | B2 | 24 December 2008 |
| | | | | JP | 2004259625 | A | 16 September 2004 |
| | | | | TW | 200421651 | A | 16 October 2004 |
| | | | | CN | 100401573 | C | 09 July 2008 |
| | | | | US | 2004202928 | A1 | 14 October 2004 |
| KR | 20170021487 | A | 28 February 2017 | None | | | |
| CN | 102842701 | A | 26 December 2012 | CN | 102842701 | B | 03 August 2016 |
| CN | 109088050 | A | 25 December 2018 | CN | 109088050 | B | 02 February 2021 |
| | | | | US | 2019393513 | A1 | 26 December 2019 |
| JP | 2010250978 | A | 04 November 2010 | None | | | |

Form PCT/ISA/210 (patent family annex) (January 2015)